**Europäisches Patentamt**

**European Patent Office**

**Office européen des brevets**

(19)

(11) Veröffentlichungsnummer : **0 464 033 B1**

(12) ## EUROPÄISCHE PATENTSCHRIFT

(45) Veröffentlichungstag der Patentschrift :
07.01.93 Patentblatt 93/01

(51) Int. Cl.⁵ : **B60R 21/00**

(21) Anmeldenummer : **90903148.6**

(22) Anmeldetag : **19.02.90**

(86) Internationale Anmeldenummer :
**PCT/DE90/00110**

(87) Internationale Veröffentlichungsnummer :
**WO 90/11207 04.10.90 Gazette 90/23**

(54) **STEUERGERÄT FÜR EIN INSASSEN-RÜCKHALTESYSTEM UND/ODER -SCHUTZSYSTEM FÜR FAHRZEUGE.**

(30) Priorität : **20.03.89 DE 3909080**

(43) Veröffentlichungstag der Anmeldung :
**08.01.92 Patentblatt 92/02**

(45) Bekanntmachung des Hinweises auf die
Patenterteilung :
**07.01.93 Patentblatt 93/01**

(84) Benannte Vertragsstaaten :
**DE FR GB IT SE**

(56) Entgegenhaltungen :
**EP-A- 292 669**
**EP-A- 305 654**

(56) Entgegenhaltungen :
**WO-A-88/07461**
**DE-A- 2 123 359**
**DE-A- 2 920 147**
**DE-A- 3 001 780**
**FR-A- 2 139 944**

(73) Patentinhaber : **SIEMENS
AKTIENGESELLSCHAFT
Wittelsbacherplatz 2
W-8000 München 2 (DE)**

(72) Erfinder : **EIGLER, Jürgen
Am Judenfeld 16
W-8400 Regensburg (DE)**
Erfinder : **WEBER, Reinhard
Am Europakanal 26
W-8400 Regensburg (DE)**

## Beschreibung

Die Erfindung betrifft eine Weiterbildung des im Oberbegriff des Patentanspruches 1 angegebenen Steuergerätes, welches durch die

- DE-A-2 123 359

bekannt ist.

° Um die Zuverlässigkeit des Steuergeräts zu verbessern bzw. zu optimieren,

° nämlich um die Sicherheit dafür, daß fehlerhafte Auslösungen des Systems vermieden werden, zu erhöhen,

besitzt diese bekannte Steuergerät bereits mehrere Auswerteschaltungen, welche mittels unterschiedlicher Schwellwerte aufgrund charakteristischer Merkmale des Sensorausgangssignals mehr oder weniger genau feststellen, welche Art von Unfall - wie Frontal- oder Seitenaufprall - vorliegt und wie kritisch die dabei gemessenen Verzögerungen bzw. Beschleunigungen zu bewerten sind. Vor allem in der für die Auswertung maßgeblichen Anfangsphase des Unfalls unterscheiden sich die zeitlichen Verläufe der Sensorausgangssignale mehr oder weniger deutlich voneinander, wodurch sie mehr oder weniger nicht nur auf die Unfallart, sondern auch einen Rückschluß auf die kommende Schwere des Unfalls schon in der Anfangsphase zulassen. Dieses Steuergerät nutzt die Tatsache aus, daß der zeitliche Verlauf des Sensorausgangssignals stark abhängt von der jeweiligen Unfallart, z.B. ob es sich um einen Frontal- oder Schrägaufprall handelt. Es genügt nämlich nicht, alleine mittels eines einzigen Schwellwertes nur zu ermitteln, ob z.B. die Steilheit bzw. die Amplitude bzw. das Integral des Sensorausgangssignals einen zugeordneten Schwellwert überschreitet.

Beim genannten Stand der Technik finden also unterschiedliche Auswertungen statt, wobei jede der Auswertungen auf eine spezifische Entscheidung hin dimensioniert ist und schließlich alle Auswertungen logisch verknüpft werden. Damit kann jede einzelne Auswertung unabhängig von den übrigen Auswertungen auf die an sie gestellten spezifischen Anforderungen hin optimiert werden.

Solche unterschiedlichen Auswertungen und Optimierungen sind auch bei der Erfindung gegeben, wodurch die damit verbundenen Vorteile auch bei der Erfindung erreichbar sind. Die Erfindung gestattet also ebenfalls, die Zuverlässigkeit bzw. Sicherheit durch Feststellen sowohl der Unfallart als auch der zugehörenden Unfallschwere zu verbessern bzw. zu optimieren, wodurch an sich bereits die Wahrscheinlichkeit von Fehlauslösungen des Systems sowie die Wahrscheinlichkeit von unnötigen Auslösungen während eines harmlosen Unfalls verringert wird, schon weil das Auslösen eines solchen Systems für sich mit zusätzlichen Gefahren für die Insassen, z.B. Gehörschädigung und momentaner Verlust der Lenkfähigkeit, und überdies mit nachfolgenden Reparaturkosten verbunden ist.

Die Erfindung soll aber nicht nur gestatten, vor einer Auslösung

- festzustellen, welche Unfallart überhaupt vorliegt,

- sicherzustellen, daß der Unfall ggf. auch so schwer ist, daß, trotz der mit dem Auslösen verbundenen Gefahren und Kosten, eine Auslösung des Systems gerechtfertigt ist, und

- sicherzustellen, daß die Auslösung nicht aufgrund eines Sensorausgangssignales bewirkt wird, das gar nicht einem Unfall entspricht.

Die Erfindung soll nämlich zusätzlich gestatten,

-aus dem Verlauf des Sensorausgangssignals bzw. der Sensorausgangssignale auch einen möglichst optimalen Zeitpunkt für die Auslösung des Systems unabhängig von jenem Zeitpunkt zu ermitteln, zu welchem die Überschreitung von Schwellwerten festgestellt wird.

Die Erfindung geht nämlich zusätzlich von der Erkenntnis aus, daß bei einem Unfall das System nicht immer sofort ausgelöst werden soll, sobald erkannt ist, daß das System auszulösen ist. Das System soll hingegen oft zu anderen Zeitpunkten, eben rechtzeitig ausgelöst werden. Eine zu frühe Aktivierung des Systemes bedeutet einen mangelhaften Schutz in der späteren Unfallphase, und eine zu späte Aktivierung bedeutet zusätzliche Gefahren für die Insassen aufgrund ihrer bereits erreichten unfallbedingten Vorverlagerung, bezogen auf die Fahrgastzelle.

Diese besondere Aufgabe der Erfindung wird durch das Steuergerät gelöst, welches die im Hauptanspruch angegebenen Merkmale aufweist.

Erfindungsgemäß wird also der zeitliche Verlauf des Sensorausgangssignals bzw. der Sensorausgangssignale zunächst nach verschiedenen Kriterien analysiert, wobei jedem dieser Kriterien ein mathematisch anders definierter Schwellwert zugrunde gelegt ist. Durch logische Verknüpfung der einzelnen Auswerteergebnisse wird schließlich das endgültige Kriterium für die Auslösung des Systems ermittelt. Vor allem gestattet aber die Erfindung, die Entscheidung über den Auslösezeitpunkt zeitlich nicht mehr eng mit der Entscheidung darüber, ob die Auslösung eingeleitet werden soll, zu verknüpfen, sondern die Auslösung auch zeitlich zu verschieben. Die Erfindung gestattet also, das in einem Fahrzeug installierte Insassen-Rückhaltesystem bzw. - Schutzsystem bei einem Unfall zu einem möglichst optimierten Zeitpunkt zu zünden.

Die in den Unteransprüchen angegebenen zusätzlichen Maßnahmen gestatten, jeweils zusätzliche Vorteile zu erreichen. Unter anderem gestatten die Maßnahmen gemäß Anspruch

2, sicherzustellen, daß nur dann, wenn die UND-verknüpften unterschiedlichen Auswertungen das System auslösen wollen, wirklich eine Auslösung einleitbar ist, - soweit nicht weitere Auswertungen ihrerseits endgültig die Auslösung des Systems verhindern,

3, Auslösungen des Systems zu verhindern, wenn die betreffende Auswertung ergibt, daß nur eine nicht-unfallbedingte Störung, z.B. durch ein Schlagloch, durch eine Motorfehlzündung, durch zu schlagartiges Einkuppeln, oder durch einen Wackelkontakt beim Sensor, usw. vorlag,

4, die Auslösung des System alternativ abhängig von Auswerteergebnissen zu machen,

5, Zeitfenster festzulegen, in welchen die von den betreffenden Auswertungen erzeugten Auswerteergebnis-Signale an die Auslösungs-Schaltung weitergegeben werden können, um fehlerhafte Auslösungen, nämlich zu falschen Zeitpunkten, zu verhindern, - z.B. Auslösungen bei einem Aufprall auf einen durch den Aufprall abknickenden dünnen Baum zu verhindern, sowie

6, in besonders eleganter Weise mit wenig Hardwareaufwand, flexibel an viele Fahrzeugtypen anpaßbar, die Erfindung zu realisieren.

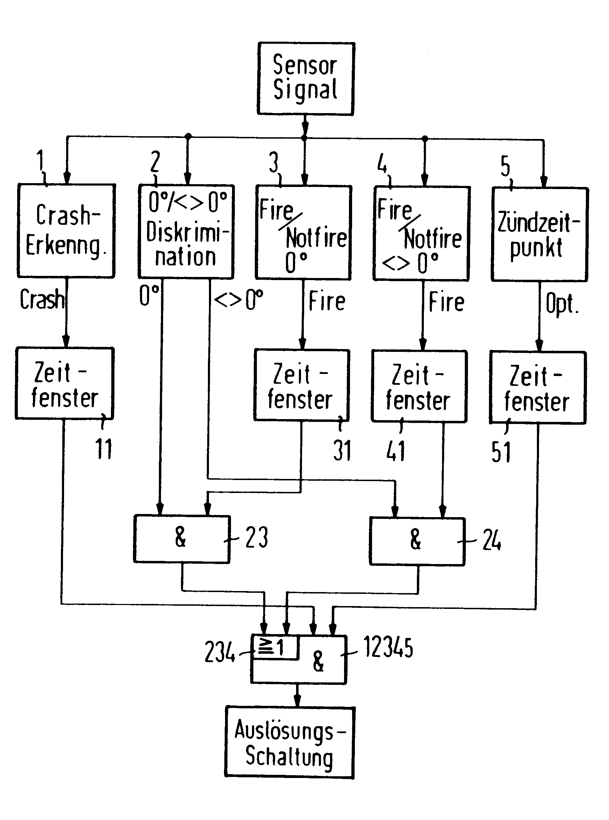

Die Erfindung und deren Weiterbildungen werden anhand des in Insassen-Rückhaltesystem bzw. -Schutzsystem bei einem Unfall zu einem möglichst optimierten Zeitpunkt zu zünden. Diese Rechtzeitigkeit bereitet im allgemeinen nämlich erhebliche Schwierigkeiten, weil die Auslösung des Systems möglichst zu einem Zeitpunkt erfolgen soll, zu dem erst ein Bruchteil der kinetischen Energie des Fahrzeuges abgebaut ist. Eine zu frühe Aktivierung bedeutet einen mangelhaften Schutz in der späteren Unfallphase, aber eine zu späte Aktivierung bedeutet zusätzliche Gefahren für die Insassen aufgrund ihrer bereits erreichten unfallbedingten Vorverlagerung, bezogen auf die Fahrgastzelle. Die Erfindung und deren Weiterbildungen werden anhand des in der Figur gezeigten Ausführungsbeispiels weiter erläutert. Der Übersichtlichkeit wegen enthält dieses gezeigte Beispiel fünf getrennte Auswerteschaltungen, von welchen jede den zeitlichen Verlauf des Sensorausgangssignals nach anderen Kriterien und damit nach einer anderen Definition des Schwellwertes analysiert - manche dieser Auswerteschaltungen können in sich sogar mehrere Schwellwerte benutzen, z.B. einen unteren Schwellwert und einen oberen Schwellwert, um fensterartige Auslösebedingungen zuzulassen, welche also einem Toleranzbereich entsprechen.

Bei dem in der Figur gezeigten Beispiel wurden beispielhaft die folgenden vier Anforderungen an die Auswerteschaltungen 1 bis 5 gestellt:

1. Erkennung von unfalltypischen Signalverläufen des Sensorausgangssignals mittels der Auswerteschaltung 1,

2. Erkennung verschiedener Unfalltypen aus dem Sensorausgangssignal mittels der Auswerteschaltung 2,

3. Ermittlung der Überschreitung einer Auslöseschwelle mittels der Auswerteschaltungen 3 und 4, wobei deren Auswertung jeweils speziell auf einen bestimmten Unfalltyp, hier Frontalaufprall bei Auswerteschaltung 3 und Schrägaufprall bei Auswerteschaltung 4, hin ausgelegt ist, und

4. Ermittlung eines optimalen Auslösezeitpunktes für das System unter Berücksichtigung von empirisch ermittelten Werten der Insassenvorverlagerung und der Auslöse-Totzeit des Systems mittels der Auswerteschaltung 5.

Das in der Figur gezeigte Ausführungsbeispiel weist folgende 5 parallele Auswerteschaltungen auf:

- zur Unterscheidung von unfalltypischen Signalverläufen des Sensorausgangssignals von andersartigen Sensorausgangssignalen eine Auswerteschaltung 1;

- zur Unterscheidung der Unfalltypen Frontal- und Schrägaufprall eine Auswerteschaltung 2;

- zur Ermittlung der Überschreitung der Auslöseschwetle für einen Frontalaufprall eine Auswerteschaltung 3;

- zur Ermittlung der Überschreitung der Auslöseschwelle für einen Schrägaufprall eine Auswerteschaltung 4; und

- zur Ermittlung eines optimalen Auslösezeitpunktes für das gegebene System - unter Berücksichtigung empirisch ermittelter Werte der Insassenvorverlagerung und der Auslöse-Totzeit des Systems - eine Auswerteschaltung 5.

Die in der Figur angeoebenen logischen Verknüpfungen entsprechen den oben beschriebenen Anforderungen 1 bis 4 an die Auswerteschaltungen 1 bis 5, worauf in den späteren Darlegungen noch detaillierter eingegangen wird.

Im folgenden werden zuerst wichtige Funktionen der im Blockschaltbild beispielhaft dargestellten Komponenten näher erläutert, bevor die Zusammenarbeit aller dieser Auswerteschaltungen 1 bis 5 näher beschrieben werden.

Der Block "Sensor-Signal" enthält hier mindestens einen einzigen Sensor, z.B. einen elektronischen Sensor, bevorzugt mit analogem Ausgangssignai. Über diesen elektronischen Sensor wird kontinuierlich die Beschleunigung bzw. Verzögerung am Einbauort des Sensors im Fahrzeug gemessen. Der Sensor kann als piezoresistiver Sensor aufgebaut sein, der eine der Beschleunigung bzw. Verzögerung proportionale Ausgangsspannung abgibt. Das Ausgangssignal des Sensors wird soweit verstärkt, daß sich ein sinnvoller Arbeitsbereich ergibt. Eventuelle Nullpunktschwankungen und sonstige niederfrequente Störungen werden z.B. über einen im Block enthaltenen nachgeschalteten Bandpaß ausgefiltert. So aufbereitet kann das Ausgangssignal des Sensors an die parallel angeordneten Auswerteschaltungen 1 bis 5 übergeben werden. Bei digitaler Verarbeitung in diesen Schaltungen 1 bis 5 kann zuvor, z.B. noch im Block "Sensor-Signal", eine Umsetzung in die digitale Form mittels eines Analog/Digital-Wandlers durchgeführt werden.

Der Block 1 "Unfallerkennung" ist die erste im Beispiel angebrachte Auswerteschaltung. Sie erzeugt an ihrem Ausgang ein Ausgangssignal, welches das Vorhandensein eines unfalltypischen Beschleunigungsverlaufs bzw. Verzögerungsverlaufs anzeigt. Unfalltypische Verläufe dieser Art sind im allgemeinen Sensorausgangssignale, welche negative Beschleunigungen anzeigen, welche ferner plötzlich einsetzen, welche über eine bestimmte Zeit vorhanden sind und welche aber nicht zu schnell zu große Amplituden aufweisen. Sensorausgangssignale, die nur kurzzeitig auf negative (oder positive) Beschleunigungen schließen lassen, weisen eher auf ein Störsignal oder auf einen Hammerschlag oder auf das Fahren über ein Schlagloch hin und dürfen daher die Auslösungs-Schaltung nicht aktivieren. Ebenso sind Sensorausgangssignale, die sehr schnell eine große Amplitude annehmen, eher z.B. ein Hinweis auf einen Schaden im Sensor. Diese Prüfung auf unfalluntypische Merkmale führt die Auswerteschaltung 1 bevorzugt mittels einer ganzen Reihe von verschieden definierten Schwellwerten durch.

Der Block 2 "Frontal-Schrägaufprall-Unterscheidung" ist die zweite im Beispiel angebrachte Auswerteschaltung. Sie erkennt aus typischen, empirisch ermittelbaren Merkmalen des Verzögerungs- bzw. Beschleunigungsverlaufs, ob ein Frontal- oder ein Schrägaufprall des Fahrzeugs vorliegt. Diese Unterscheidung ist erforderlich, um unterschiedliche Auslöseschwellen des Rückhaltesystems bzw. Schutzsystems für beide Unfalltypen zu realisieren. Dieser Block 2 gestattet also, die unterschiedlichen Eigenschaften und Verletzungsrisiken bei beiden Unfalltypen zu berücksichtigen. Falls nicht mehrere Sensoren mit unterschiedlicher Richtungsorientierung im Block "Sensor-Signal" angebracht sind, deren Ausgangssignale getrennt den Auswerteschaltungen oder zumindest der Auswerteschaltung 2 zugeleitet werden,- falls also nur ein einziger Sensor im Block "Sensor-Signal" angebracht ist, kann als typisches Unterscheidungsmerkmal beispielsweise das schnellere Ansteigen der Verzögerung bei Frontalaufprall herangezogen werden. Der Block 2 könnte somit z.B. einen Bandpaß mit nachgeschaltetem Schwellwertschalter mit Hysterese enthalten.

Der Block 3 "Auslöseschwelle Frontalaufprall überschritten?" ist die dritte im Beispiel angebrächte Auswerteschaltung. Sie untersucht das Sensorausgangssignal daraufhin, ob bei einem Crash die spezifische Auslöseschwelle des Systems für einen Frontalaufprall überschritten wurde. Diese Schwelle kann z.B. durch die Mindestgeschwindigkeit des Fahrzeugs unmittelbar vor dem Crash definiert werden. Wenn diese Mindestgeschwindigkeit nicht direkt mit dem Sensor bzw. mit einem der Sensoren gemessen wird, können auch Einzelmerkmale des Beschleunigungs- bzw. Verzögerungssignals des Sensors während des Crashs zur Definition des Schwellwertes, sogar zur Schätzung der Geschwindigkeit vor dem Crash, herangezogen werden. Die Festlegung einer unfallart-typischen Auslöseschwelle ist nämlich sinnvoll, da eine Auslösung nur erfolgen soll, wenn sie wirklich notwendig ist. Wie schwer ein Crash ist, läßt sich z.B. daran erkennen, wie hoch die Verzögerung bzw. Beschleunigung des Fahrzeugs ist und wie lange sie bis dahin andauerte. Der Block 3 könnte also einen Schwellwertschalter mit nachfolgendem Integrator enthalten.

Der Block 4 "Auslöseschwelle Schrägaufprall überschritten?" ist die vierte im Beispiel angebrachte Auswerteschaltung. Sie arbeitet analog zum entsprechenden Block 3 für den Frontalaufprall, berücksichtigt aber den empirisch ermittelbaren typischen zeitlichen Verlauf bei einem Schrägaufprall also dann auch die besonderen Fahrzeug-Eigenschaften bei einem Schrägaufprall.

Weil die Auswertungsergebnisse der Blöcke 3 und 4 mit dem Auswertungsergebnis des Blockes 2 mittels der UND-Glieder 23 und 24 verknüpft werden, könnte das gezeigte Beispiel dadurch in eine andere erfindungsgemäße Variante umdimensioniert werden, daß die Blöcke 2, 3, 4 - und sogar die Glieder 23, 24 - eine einzige, entsprechend komplex aufgebaute Auswerteschaltung bilden, die unterschiedlich definierte Schwellwerte benutzt, um dieselben Prüfungen des zeitlichen Verlaufs des Sensorausgangssignals durchzuführen.

Der Block 5 "Zündzeitpunkt" ist die fünfte im Beispiel gezeigte Auswerteschaltung. Das spezifische Problem bei der Bestimmung des optimalen Zündzeitpunkts für das System besteht darin, daß eine Auslösung optimal eine bestimmte Zeit (z.B. 30 ms) vor dem Zeitpunkt erfolgen sollte, zu dem sich der Insasse um einen bestimmten Weg aus seiner normalen Sitzposition entfernt hat. Ein ausgelöster Airbag z.B. braucht eine bestimmte Zeit, bis er voll aufgeblasen ist; erst dann kann er den Insassen wirksam schützen. Kurze Zeit später fällt der Airbag wieder in sich zusammen und verliert seine Schutzwirkung. Der Airbag soll also nicht zu früh, aber auch nicht zu spät, sondern so rechtzeitig gezündet werden, daß der Insasse in den gerade vollständig aufgeblasenen Airbag fällt. Der Block 5 prüft also z.B. anhand eines oder mehrerer ihm zugeordneter Schwellwerte, ob es für die Auslösung des Systems bereits zu spät ist.

Der Block 5 soll also die Fähigkeit haben, aus bereits aufgetretenen Beschleunigungen während eines Crashs auf dessen zukünftigen Verlauf schließen zu können. Dies ist dann möglich, wenn er so entwickelt und optimiert wird, daß der typische Beschleunigungsverläufe aus Crash-Tests möglichst korrekt wiedererkennt. Dazu kann der Block 5 das Signal erfindungsgemäß z.B. so verarbeiten, daß er das Sensorausgangssignal bandfiltert und z.B. zweimal integriert. Man kann auf diese Weise ein weiteres Signal erzeugen, in das mit unterschiedlicher Bewertung das bandgefilterte Sensorausgangssignal, das Signal nach der ersten Integration und das Signal nach der zweiten Integration eingehen und sich besonders gut zur fahrzeugspezifischen Optimierung des Auslösezeitpunktes des Systems eignet, wobei der optimale Auslösezeitpunkt bei Erreichen eines bestimmten Schwellwertes erreicht wird.

Am Rande sei hier erwähnt, daß man erfindungsgemäß in einem Steuergerät zur Steuerung des Systems noch weitere Unfallarten unterscheiden kann, z.B. einen seitlichen Aufprall, einen Heckaufprall oder den freien Fall in einen Abgrund. Dies könnte man z.B. dadurch erreichen, daß man neben den Auswerteschaltungen 2, 3 und 4 in das in der Figur gezeigte Beispiel noch weitere, entsprechend aufgebaute und dimensionierte Auswerteschaltungen einfügt.

Die Blöcke 11, 31, 41, 51 "Zeitfenster" dienen dazu, um eine Meldung über ein erkanntes Ereignis für eine bestimmte Zeitspanne festzuhalten, aber auch, um diese Meldung zeitlich zu limitieren. Dadurch wird erreicht, daß im Crashfall mehrere Entscheidungen der Blöcke 1 bis 5 zeitlich richtig so zusammenfallen, daß über Verknüpfungsglieder eine Auslösung des Systems ermöglicht wird. Andererseits ist es nämlich auch günstig, in den Zeitfenstern Signale nach einer bestimmten Zeit wieder zu löschen, damit kein falscher Zustand vorgetäuscht wird. Die betreffenden Dauern sind für jede Auswerteschaltung mehr oder weniger verschieden zu wählen, auch abhängig vom betreffenden Fahrzeugtyp.

Um die Wichtigkeit der Zeitfenster aufzuzeigen, kann auf folgenden Verlauf hingewiesen werden: Das Fahrzeug fährt gegen ein Hindernis. Der Crash verläuft z.B. so, daß das Fahrzeug zuerst langsam abgebremst wird, wobei sich der Insasse bereits nach vorne verlagert. Anschließend wird das Fahrzeug durch das Hindernis abrupt angehalten. Bekannte Steuergeräte würden jetzt wegen der Abruptheit den Airbag auslösen. In diesem Fall sollte aber der Airbag nicht mehr ausgelöst werden, da dieser dem In

sassen zu spät ins Gesicht knallte, wobei der Insasse zu diesem viel zu späten Zeitpunkt nicht mehr geschützt, sondern nur noch zusätzlichen Gefahren ausgesetzt würde. Solche Gefahren können mittels der Zeitfenster vermieden werden. Die Blöcke "Zeitfenster" können jeweils, wenn man nur einen geringen Aufwand anstrebt, schon durch ein monostabiles Kippglied realisiert werden.

Der Block "Auslösungs-Schaltung" stellt eine elektronische Schaltung dar, die das System im vorliegenden Beispiel dann aktiviert, wenn einer der beiden folgenden Sätze von Bedingungen erfüllt ist:

1. Satz:
- "Crash-Erkennung" signalisiert ablaufenden Crash.
- "Frontal-/schrägaufprall-Unterscheidung" hat typische Merkmale eines Frontalaufpralls erkannt.
- "Auslöseschwelle Frontalaufprall überschritten?" signalisiert das Überschreiten der Auslöseschwelle.
- Der optimale Zündzeitpunkt ist erreicht.

2. Satz:
- "Crash-Erkennung" signalisiert ablaufenden Crash.
- "Frontal-/schrägaufprall-Unterscheidung" hat typosche Merkmale eines Schrägaufpralls erkannt.
- "Auslöseschwelle Schrägaufprall überschritten?" signalisiert das Überschreiten der Auslöseschwelle.
- Der optimale Zündzeitpunkt ist erreicht.

Der Block "Auslösungs-Schaltung" kann z.B. eine elektronische Schaltung sein, die einen ausreichenden Stromimpuls durch die Zündpille eines Airbag leitet, so daß diese Zündpille zündet.

Die parallelen Auswerteschaltungen 1 bis 5 erzeugen hier also binäre Ausgangssignale. Der 'wahr'-Zustand der Auswerteschaltungen 1, 3, 4, 5 begünstigt bzw. unterstützt nach den oben genannten 1., 3. und 4. Anforderungen jeweils die Auslösung des Systems. Ihre Signale werden über Zeitschaltungen (Zeitglieder) 11, 31, 41, 51 so beeinflußt, daß sich eine sinnvolle zeitliche Überlappung der 'wahr'-Zustände der Einzelsignale ergeben kann. Im einzelnen kann dies z.B. wie folgt aussehen:
- Zur Auswertung nach der 1. Anforderung:
Der 'wahr'-Zustand des Ausgangssignals der Auswerteschaltung 1 wird durch das Zeitglied 11 jeweils um eine bestimmte Zeit verlängert, z.B., damit während eines Unfalls auch kürzere Beschleunigungspausen bzw. Verzögerungspausen überbrückt werden. Dies entspricht der Funktion einer Ausschaltverzögerung.
- Zu den Auswertungen nach den 3. und 4. Anforderungen:
Die Auswerteschaltungen 3 bzw. 4 sowie 5 werden bei entsprechender Unfallschwere am Ausgang für die gesamte weitere Unfalldauer den Ausgangszustand 'wahr' haben. Um ein eventuell zu spätes Zünden aufgrund einer zu großen unfallbedingten Vorverlagerung des Insassen zu verhindern, können durch die nachgeschalteten Zeitglieder 31, 41, 51 die 'wahr'-Zustände zeitlich begrenzt werden. Dies entspricht der Funktion von monostabilen Kippgliedern, - die Zeitglieder können also z.B. solche Kippglieder enthalten.

Die Auswertung nach der 2. Anforderung erzeugt mehrere Ausgangssignale entsprechend der Anzahl der zu unterscheidenden Unfalltypen und damit entsprechend der Anzahl der Auswerteschaltungen nach der 3. Anforderung - hier in dem in der Figur gezeigten Beispiel betragen diese Anzahlen jeweils zwei. Die Ausgangssignale der betreffenden Auswerteschaltung 2 geben über die UND-Verknüpfungen 23, 24 das Ausgangssignale jeweils einer der Auswerteschaltungen 3 und 4 frei.

Die Ergebnisse dieser Freigabe werden über eine ODER-Verknüpfung 234 wieder miteinander verknüft. Das Ausgangssignal dieser Verknüpfung 234 wird im folgenden Auslösefreigabe genannt.

Die Auslösefreigabe und die Ausgangssignale der Auswerteschaltungen 1 und 5 wrden entsprechend der 1. und 4. Anforderung noch durch die UND-Verknüpfung 12345 miteinander verknüpft. Das Ausgangssignal dieser Verknüpfung 12345 wird zur Ansteuerung der Auslösungsschaltung verwendet.

Allgemein formuliert ergibt sich folgende Bool'sche Gleichung für die Ermittlung des Resultats unter Bezugnahme auf die oben genannten vier Anforderungen:

```
(     Ausgangssignal des Zeitglieds 11 gemäß der 1. Anforderung

                             UND

(((  Freigabesignal x durch die Auswerteschaltung 2 gemäß der 2

      Anforderung  )

                             UND

(     Ausgangssignal des Zeitglieds x1 der Auswerteschaltung x

      gemäß der 3. Anforderung/Unfalltyp x ))

                            ODER

                            . . . .

                            ODER

((   Freigabesignal y durch die Auswerteschaltung 2 gemäß der

     2. Anforderung  )

                             UND

(     Ausgangssignal des Zeitglieds y1 der Auswerteschaltung y

      gemäß der 3. Anforderung/Unfalltyp y )))

                             UND

(     Ausgangssignal des Zeitglieds 51 der Auswerteschaltung 5

      gemäß der 4. Anforderung  )
```

Die beschriebenen analogen und logischen Funktionen können in entsprechend digitalisierter Form auch mit einem speicherprogrammierten Rechner, z.B. einem Mikrocomputer, erreicht werden. Der Rechner bildet dann also alle, oder zumindest einen Teil der Funktionen der Auswerteschaltungen, vgl. 1 bis 5, sowie eventuell auch ihrer Zeitfenster, vgl. 11, 31, 41, 51 sowie der Verknüpfungsglieder 23, 24, 234, 12345, nach.

**Patentansprüche**

1.    Steuergerät für ein Insassen-Rückhaltesystem und/oder Insassen-Schutzsystem für Fahrzeuge - z.B. für Airbag und/oder Gurtstrammer und/oder aufklappbare Überrollbügel - , mit
      - einem oder mehreren Beschleunigungs- bzw. Verzögerungssensoren - z.B. einem ein piezoresistives Sensorelement aufweisenden Sensor - , welche ein elektronisches analoges - und/oder ein durch einen Analog-Digital-Umsetzer digitalisiertes, ursprünglich analoges - Sensorausgangssignal entsprechend der auf den betreffenden Einbauort im Fahrzeug wirkenden Beschleunigung bzw. Verzögerung erzeugen, so daß der zeitliche Verlauf des Sensorausgangssignals dem betreffenden Verlauf der Beschleunigungen bzw. Verzögerungen entspricht,

- einer oder mehreren Auswerteschaltungen (1 bis 5), welche (1 bis 5) das bzw. die Sensorausgangssignal(e) vor allem hinsichtlich des Überschreiten von Schwellwerten auswerten, und

- einer Auslösungs-Schaltung, welche bei Überschreiten eines oder mehrerer Schwellwerte ein oder mehrere insassenschützende Komponenten des Systems auslöst,

wobei

- die Sensorausgangssignale jeweils mehreren unterschiedlichen Auswertungen unterzogen werden, indem die Sensorausgangssignale einer komplex arbeitenden Auswerteschaltung bzw. mehreren unterschiedlich arbeitenden Auswerteschaltungen (1 bis 5, 11, 31, 41, 51) zugeleitet werden, welche (1 bis 5, 11, 31, 41, 51) jeweils den zeitlichen Verlauf nach unterschiedlichen Kriterien und damit mit mehreren, unterschiedlich definierten Schwellwerten auswerten,

- zumindest eine der Auswerteschaltungen (2) so aufgebaut und betrieben ist, daß sie anhand von typischen Merkmalen des zugeleiteten zeitlichen Verlaufes und anhand der ihr zugeordneten Definition des Schwellwertes zumindest zwei verschiedene Unfallarten - z.B. frontal und schräg, seitlich und/oder Heckaufprall - unterscheidet, welcher unterschiedlich definierte Schwellwerte für die Schwere des Unfalls zugeordnet sind,

- zumindest eine dieser Auswerteschaltungen (3, 4) so aufgebaut und betrieben ist, daß sie (3, 4) anhand von typischen Merkmalen des zugeleiteten zeitlichen Verlaufes und anhand der ihr (3, 4) individuell zugeordneten Definition(en) des oder der Schwellwerte(s) die Schwere des Unfalls der ihr (3, 4) individuell zugeordneten (von 2 festgestellten) Unfallart feststellt,

- Ausgänge der Auswerteschaltung(en) (1 bis 5) mit Eingängen von mindestens einem logisch verknüpfenden Verknüpfungsglied (23, 24, 234, 12345) verbunden sind, welche (23, 24, 234, 12345) die betreffenden Auswertungsergebnisse verknüpft und welche (23, 24, 234, 12345) an ihrem Ausgang ihr Verknüpfungsergebnis an die Auslösungs-Schaltung weiterleitet, und

- die logische Verknüpfungsfunktion des Verknüpfungsgliedes bzw. der Verknüpfungsglieder (23, 24, 234, 12345) so gewählt ist, daß das System nur ausgelöst wird, wenn die Auswertungen anhand der unterschiedlichen Kriterien sowohl (mittels 2) eine definierte Unfallart aus mehreren definierten Unfallarten, als auch (mittels 3 bzw. 4) eine Überschreitung jenes oder jener Schwellwerte(s) ergab, welche(r) der (mittels 2 festgestellten) betreffenden Unfallart spezifisch zugeordnet wurde(n),

**dadurch gekennzeichnet,** daß

- zumindest eine Auswertung (5) den optimalen Auslösezeitpunkt ermittelt, der abweicht vom Zeitpunkt, zu welchem die Überschreitung der Auslöseschwelle (3, 4) ermittelt wird.

**2.** Steuergerät nach Anspruch 1,
**dadurch gekennzeichnet,** daß
-zumindest eines der Verknüpfungsglieder ein UND-Glied (23, 24, 12345) ist.

**3.** Steuergerät nach Anspruch 2,
**dadurch gekennzeichnet,** daß
-zumindest eine der Auswerteschaltungen (1) so aufgebaut und betrieben ist,
° daß sie anhand des zeitlichen Verlaufes unfall-typische Signalverläufe von anderen Signalverläufen (z.B. Störungen durch Schlaglöcher oder Blitze) unterscheidet und
° daß sie über das oder über eines der UND-Glieder (12345) das Auswerteergebnis von zumindest einer anderen Auswertung (2, 3, 4) zur Weiterleitung an die Auslösungs-Schaltung  freigeben kann.

**4.** Steuergerät nach Anspruch 2 oder 3,
**dadurch gekennzeichnet,** daß
- zumindest eines der Verknüpfungsglieder ein ODER-Glied (234) ist, so daß Auswertungsergebnisse (von 23, 24) so ODER-verknüpft der Auslösungs-Schaltung zugeleitet werden, daß das System alternativ durch von allen ODER-verknüpften Auswertungsergebnissen (23, 24) ausgelöst werden kann.

**5.** Steuergerät nach einem der vorhergehenden Ansprüche,
**dadurch gekennzeichnet,** daß
-zumindest eine der Auswerteschaltungen (1, 3, 4, 5) über ein nachgeschaltetes Zeitglied (11, 31, 41, 51) mit der Auslösungs-Schaltung verbunden ist, um die Auslösung des Systems und damit um die Weiterleitung des Ausgangssignals der betreffenden Auswerteschaltung (1, 3, 4, 5) zur Auslösungs-Schaltung

EP 0 464 033 B1

nur während bestimmter Zeitfenster zuzulassen.

6. Steuergerät nach einem der vorhergehenden Ansprüche,
**dadurch gekennzeichnet,** daß
- die Auswerteschaltung(en) (1 bis 5) und/oder das oder die Zeitglieder (11, 31, 41, 51) und/oder die logischen Verknüpfungsglieder (23, 24, 234, 12345) durch zumindest einen entsprechend speicherprogrammierten Rechner gebildet sind.

**Claims**

1. Control apparatus for occupant restraint system and/or occupant protection system for vehicles - for example for an airbag and/or belt tensioner and/or collapsible roll bar -, having
   - one or more acceleration or deceleration sensors - for example a sensor having a piezo-resistive sensor element - which generate an electronic analog - and/or an originally analog, digitised by an analog/ digital converter - sensor output signal corresponding to the acceleration or deceleration acting on the relevant installation point in the vehicle so that the time response of the sensor output signal corresponds to the relevant response of the accelerations or decelerations,
   - one or more evaluation circuits (1 to 5) which (1 to 5) evaluate the sensor output signal or signals primarily with respect to exceeding threshold values, and
   - a tripping circuit, which trips one or more occupant-protection components of the system when one or more threshold values are exceeded,
   - the sensor output signals in each case being subjected to a plurality of different evaluations, in that the sensor output signals are supplied to an evaluation circuit which operates in a complex manner or to a plurality of evaluation circuits (1 to 5, 11, 31, 41, 51) which operate differently, and which (1 to 5, 11, 31, 41, 51) in each case evaluate the time response according to different criteria and hence have a plurality of differently defined threshold values,
   - at least one of the evaluation circuits (2) being constructed and operated such that, using typical features of the derived time response and using the definition of the threshold value allocated thereto, at least two different types of accident - for example frontal and oblique, side and/or rear impact - are differentiated, to which differently defined threshold values for the severity of the accident are allocated,
   - at least one of said evaluation circuits (3, 4) being constructed and operated such that, using typical features of the derived time response and using the definition or definitions of the threshold value or values individually allocated to them (3, 4), said evaluation circuit (3, 4) determines the severity of the accident of the type of accident individually allocated (of 2 which are determined) to it (3, 4),
   - outputs of the evaluation circuit or circuits (1 to 5) being connected to inputs of at least one logically linking linking element (23, 24, 234, 12345), which (23, 24, 234, 12345) links the relevant evaluation results and which (23, 24, 234, 12345) at its output passes on the result of its linking to the tripping circuit, and
   - the logic linking function of the linking element or the linking elements (23, 24, 234, 12345) being selected such that the system is tripped only when, using the different criteria, the evaluations produced both (by means of 2) one defined type of accident from a plurality of defined types of accident as well as (by means of 3 or 4) that threshold or those thresholds being exceeded which was or were specifically allocated to the relevant type of accident (determined by means of 2),
   characterised in that
   - at least one evaluation (5) determines the optimum trip time which deviates from the time at which the exceeding of the trip threshold (3, 4) is determined.

2. Control apparatus according to Claim 1, characterised in that
   -at least one of the linking elements is an AND element (23, 24, 12345).

3. Control apparatus according to Claim 2, characterised in that
   -at least one of the evaluation circuits (1) is constructed and operated such that,
     . on the basis of the time response of signal responses which are typical of accident, it differs from other signal responses (for example disturbances from hitting potholes or lightning) and
     . via the AND element, or via one of the AND elements (12345), it can enable the evaluation result of at least one other evaluation (2, 3, 4) for passing on to the tripping circuit.

8

4. Control apparatus according to Claim 2 or 3, characterised in that
- at least one of the linking elements is an OR element (234) such that evaluation results (from 23, 24) are passed OR-linked to the tripping circuit such that the system can alternatively be tripped by all OR-linked evaluation results (23, 24).

5. Control apparatus according to one of the preceding claims, characterised in that
- at least one of the evaluation circuits (1, 3, 4, 5) is connected via a downstream-connected timer (11, 31, 41, 51) to the tripping circuit, in order to initiate the tripping of the system and hence in order to initiate the passing on of the output signal of the relevant evaluation circuit (1, 3, 4, 5) to the tripping circuit only during specific time windows.

6. Control apparatus according to one of the preceding claims, characterised in that
-the evaluation circuit or circuits (1 to 5) and/or the timer or timers (11, 31, 41, 51) and/or the logic linking elements (23, 24, 234, 12345) are formed by at least one suitably memory-programmed computer.

**Revendications**

1. Appareil de commande pour un système de retenue des passagers et/ou un système de protection des passagers pour des véhicules - par exemple pour un sac gonflable et/ou un tendeur de ceinture et/ou un arceau de sécurité rabattable -, comportant
    - un ou plusieurs capteurs d'accélération ou de décélération - par exemple un capteur possédant un élément de détection piézorésistif -, qui produisent un signal de sortie analogique - et/ou un signal de sortie initialement analogique, numérisé au moyen d'un convertisseur analogique/numérique, conformément à l'accélération ou à la décélération agissant sur le lieu de montage considéré dans le véhicule, de sorte que la variation dans le temps du signal de sortie du capteur correspond à l'allure considérée des accélérations ou des décélérations,
    - un ou plusieurs circuits d'évaluation (1 à 5), qui évaluent (1 a 5) le ou les signaux de sortie du capteur surtout en ce qui concerne le dépassement de valeurs de seuil, et
    - un circuit de déclenchement, qui lors du dépassement d'une ou de plusieurs valeurs de seuil, déclenche un ou plusieurs composants du système, qui protègent les passagers,
    et dans lequel
    - les signaux de sortie du capteur sont soumis respectivement a plusieurs évaluations différentes, en ce que les signaux de sortie du capteur sont envoyés à un circuit d'évaluation qui opère de façon complexe ou à plusieurs circuits d'évaluation (1 à 5,11,31,11,51) qui opèrent différemment et qui (1 à 5,11,31,41,51) évaluent respectivement l'allure dans le temps selon des critères différents et par conséquent avec plusieurs valeurs de seuil définies différemment,
    - au moins l'un des circuits d'évaluation (2) est agencé et fonctionne de telle sorte qu'en fonction de caractéristiques typiques de l'allure dans le temps transmise et en fonction de la définition, qui lui est associée, de la valeur de seuil, il distingue au moins deux cas d'accidents différents - par exemple un choc frontal et oblique, latéral et/ou arrière - auxquels sont associées des valeurs de seuil définies différemment pour la gravité de l'accident,
    - au moins l'un de ces circuits d'évaluation (3,4) est agencé et fonctionne de telle sorte que sur la base de caractéristiques typiques de l'allure dans le temps transmise et sur la base de la ou des définitions, qui lui (3,4) sont associées individuellement, de la ou des valeurs de seuil, il (3,4) détermine la gravité de l'accident pour le type d'accident qui lui (3,4) est associé individuellement (déterminé par 2),
    - des sorties du ou des circuits d'évaluation (1 à 5) sont raccordées à des entrées d'au moins un circuit combinatoire (23,24,234,12345) réalisant une combinaison logique, ce circuit (23,24,234,12345) combinant les résultats considérés de l'évaluation et ce circuit (23,24,234,12345) retransmettant, a sa sortie, son résultat combinatoire au circuit de déclenchement, et
    - la fonction de combinaison logique du circuit combinatoire ou des circuits combinatoires (23,24,234,12345) est choisie de telle sorte que le système n'est déclenché que lorsque les évaluations effectuées sur la base des critères différents ont fourni un type d'accident défini parmi plusieurs types d'accidents définis, ainsi (au moyen de 3 ou 4) qu'un dépassement de la ou des valeurs de seuil, qui a ou ont été associées de façon spécifique au type d'accident concerné (déterminé par 2),
    caractérisé par le fait que
    - au moins une évaluation (5) détermine l'instant optimal de déclenchement qui diffère de l'instant auquel le dépassement du seuil de déclenchement (3, 4) est déterminé.

**2.** Appareil de commande suivant la revendication 1, caractérisé par le fait que
-au moins l'un des circuits combinatoires est un circuit ET (23,24,12345).

**3.** Appareil de commande suivant la revendication 2, caractérisé par le fait que
-au moins l'un des circuits d'évaluation (1) est agencé et fonctionne de telle sorte
. qu'il distingue des allures de signaux typiques d'accidents vis-à-vis d'autres allures de signaux (par exemple des perturbations dues à des nids de poules ou à des éclairs) sur la base de l'allure dans le temps, et
. qu'il peut libérer le résultat d'évaluation d'au moins une autre évaluation (2,3,4) pour sa retransmission au circuit de déclenchement, par l'intermédiaire du ou d'un des circuits ET (12345).

**4.** Appareil de commande suivant la revendication 2 ou 3, caractérisé par le fait que
-au moins l'un des circuits combinatoires est un circuit OU (234), en sorte que les résultats d'évaluation (de 23,24) sont envoyés au circuit de déclenchement en étant combinés selon la combinaison OU de telle sorte que le système peut être déclenché alternativement par tous les résultats d'évaluation (23,24) combinés selon une combinaison OU.

**5.** Appareil de commande suivant l'une des revendications précédentes, caractérisé par le fait que
-au moins l'un des circuits d'évaluation (1,3,4,5) est raccordé par l'intermédiaire d'un circuit de temporisation (11,31,41,51) branché en aval, au circuit de déclenchement de manière à autoriser le déclenchement du système et par conséquent la retransmission du signal de sorte du circuit d'évaluation considéré (1,3,4,5) au circuit de déclenchement, uniquement pendant des intervalles de temps déterminés.

**6.** Appareil de commande suivant l'une des revendications précédentes, caractérisé par le fait que
-le ou les circuits d'évaluation (1 à 5) et/ou le ou les circuits de temporisation (11,31,41,51) et/ou les circuits combinatoires logiques (23,24,234,12345) sont formés par au moins un calculateur à mémoire programmée de façon correspondante.